# EUROPÄISCHE PATENTSCHRIFT

(11) **EP 2 723 697 B1**
(45) Veröffentlichungstag und Bekanntmachung des Hinweises auf die Patenterteilung: **16.05.2018**
(21) Anmeldenummer: 12745393.4
(22) Anmeldetag: 20.06.2012
(51) Int. Cl.: C04B 28/26, B28B 1/00

(54) **VERFAHREN ZUM SCHICHTWEISEN AUFBAU VON MODELLEN**
METHOD FOR THE LAYERWISE CONSTRUCTION OF MODELS
PROCÉDÉ DE RÉALISATION PAR COUCHES DE MODÈLES

(30) Priorität: 22.06.2011 DE 102011105688
(43) Veröffentlichungstag der Anmeldung: 30.04.2014
(73) Patentinhaber: Voxeljet AG, 86316 Friedberg (DE); Hüttenes-Albertus Chemische Werke GmbH, 40549 Düsseldorf (DE)
(72) Erfinder: GNÜCHTEL, Ingo, 86504 Merching (DE); GÜNTHER, Daniel, 80637 München (DE); EDERER, Ingo, 82269 Geltendorf (DE); LUSTIG, Christian, 30165 Hannover (DE); MÜLLER, Edgar, 30855 Langenhagen (DE)
(74) Vertreter: Helbig, Christian
(86) Internationale Anmeldenummer: PCT/DE2012/000646
(87) Internationale Veröffentlichungsnummer: WO 2012/175072

(56) Entgegenhaltungen:
- EP-A1- 2 163 328
- EP-A2- 1 721 875
- WO-A1-98/09798
- WO-A1-2011/087564
- DE-B4-102004 014 806
- US-A- 4 022 704
- US-A- 4 030 939
- US-A1- 2004 138 336
- US-A1- 2006 254 467
- Anonymous: "Sikalon A -Sodium Disilicate Powder - Woellner", Woellner - Product Sheet, 1 November 2006 (2006-11-01), pages 1-2, XP055369277, Ludwigshafen, Germany Retrieved from the Internet: URL:http://jcojan.free.fr/prado-latest/tel echargment/Fournisseurs/WOELLNER%20FRANCE/ Siege/ft/Sikalon%20A.pdf [retrieved on 2017-05-04]
- Anonymous: "Product Data Sheet : PORTIL A", Product Data Sheet - Cognis Care Chemicals, 1 August 2009 (2009-08-01), pages 1-2, XP055369285, Retrieved from the Internet: URL:https://e-applications.basf-ag.de/data /basf-pcan/pds2/pds2-web.nsf/3C7DF01C8DBC0 AA5C125765700419691/$File/PORTIL_r_A_E.pdf [retrieved on 2017-05-04]

## Beschreibung

Die Erfindung betrifft ein Verfahren zum schichtweisen Aufbau von Modellen gemäß dem Oberbegriff des Patentanspruchs 1. Generative Verfahren zur Herstellung von 3D-Strukturen sind seit langem bekannt (z.B. aus EP 0 431 924 B1, WO20068375 A2, WO98/09798 A1 oder US4022704 A) Dazu zählen unter anderem Stereolithographieverfahren (Verfestigung monomerer Flüssigkeiten mit einem energiereichen Strahl), selektives Lasersintern (Verschmelzen von Partikelmaterial mit einem energiereichen Strahl) und das 3D-Druckverfahren. Alle genannten Verfahren erlauben die vergleichsweise wirtschaftliche Herstellung von Formen für den Prototypenbau. Das 3D-Druckverfahren erlaubt zudem, wenn Druckvorrichtungen mit mehreren ansteuerbaren Düsen eingesetzt werden, allen anderen Verfahren überlegene Baugeschwindigkeiten. Damit ist die Anwendung nicht nur auf den Prototypenbereich eingeschränkt. Es sind sogar Serienbauteile wirtschaftlich erzeugbar.

Dem Stand der Technik können grundsätzlich unterschiedliche Verfahren entnommen werden: Systeme, die vollständig flüssigkeitsbasierend arbeiten und Systeme, die Pulvermaterialien verwenden, die durch Flüssigkeitseintrag oder Energieeintrag selektiv verfestigt werden.

Die erstgenannten, rein auf Flüssigkeiten basierenden Systeme sind beispielsweise aus der US 6,259,962 der Fa. Objet Geometries Ltd. bekannt. Dieses Verfahren basiert darauf, dass bei der Verfestigung zwei unterschiedliche Materialien generiert werden. Das schichtweise erzeugte Modell kann dann nach dem Druckprozess vom Stützmaterial durch einen Löseverfahren - beispielsweise ein Wasserbad - freigesetzt werden.

Die Verfestigung der anfangs für das Verdrucken flüssig bereitgestellten Materialien kann beispielsweise über UV-Strahlung erfolgen. Zudem können Zwei- oder Mehrkomponentensysteme eingesetzt werden, die auf der Bauplattform zusammen gebracht werden und verfestigen. Da das komplette Bauvolumen über Tintenstrahldrucker erzeugt werden muss, ist dieses Verfahren aber vergleichsweise langsam und daher nur für kleinere Bauteile geeignet.

Eine, insbesondere bezüglich der Zeitintensität, wesentlich wirtschaftlichere Alternative bilden die Verfahren zum schichtweisen Aufbau von Modellen, die Partikelmaterial verwenden. Bei diesen Verfahren wird ein pulverförmiges Material selektiv verbunden. Das Partikelmaterial wird beispielsweise mit einem Beschichter in dünnen Lagen auf eine Werkstückplattform auf gebracht und geglättet. Ein Druckkopf verfestigt anhand von den in Rechner hinterlegten Bauteildaten selektive Bereiche auf der Pulverschicht. Dieser Vorgang wird immer wieder wiederholt, bis das Bauteil fertiggestellt ist und aus dem unverfestigten Partikelmaterial entnommen werden kann.

Ein Vorteil hierbei ist, dass ein Teil des Bauteilmaterials bereits durch das Volumen des Partikelmaterials bereit gestellt wird. Die Menge, die flüssig mittels eines Druckers eindosiert werden muss, ist also vergleichsweise gering. So erlaubt dieses Verfahren hohe Druckkopfgeschwindigkeiten, geringe Schichtzeiten und einen - vergleichsweise - einfachen Druckkopfaufbau.

Die Verfestigung des Partikelmaterials erfolgt hier durch ein Verkleben der einzelnen Partikeln untereinander.

Anorganische Bindersysteme werden im Metallgussbereich schon seit Mitte des letzten Jahrhunderts verwendet, um Sandformen herzustellen.

So sind hierbei beispielsweise sogenannte hydraulische Bindemittel zu erwähnen, also Bindemittel, die sowohl an Luft als auch unter Wasser härten.

Hierunter fallen beispielsweise Gips-gebundene Formwerkstoffe. Zur Herstellung von Gussformen wird beispielsweise Gips enthaltendes Partikelmaterial verwendet. Der im Partikelmaterial enthaltene Gips wird mit einer wässrigen Lösung aktiviert und härtet beispielsweise selektiv aus. Die Form muss nach dem Druck getrocknet werden.

Nach der Herstellung enthält der Gips viel freies Wasser, das zu Problemen beim Guss führen kann, da es bei Erhitzung schlagartig verdampfen kann.

Weiterhin hat es sich gezeigt, dass die Festigkeit des Gipses nicht besonders hoch ist und die Temperaturbeständigkeit des Gipses lässt für die daraus entstehenden Formen nur einen Leichtmetallguss zu. Weiterhin hat es sich gezeigt, dass der Gips im ausgehärteten Zustand sehr dicht ist und für Gase, die beim Gießen entstehen können nur schwer durchlässig ist, weshalb die Gase in die Gussschmelze eindringen können.

Daneben sind auch Zement-gebundene Formwerkstoffe bekannt, hierbei soll beispielhaft auf die DE 10 2004 014 806 B4, die EP 1 510 310 A2 verwiesen werden.

Hierbei befindet sich Zement im Sand für die Gussform und der Zement wird über eine wässrige Tinte aktiviert.

Als Nachteil hat es sich hier gezeigt, dass Zemente bei Temperierung in der Regel höhere Festigkeiten entwickeln, die sie dann auch nach Abkühlung weiter behalten. Das bedeutet, dass das Gussteil nach dem Guss nur schwer vom Formstoff befreit werden kann.

Darüberhinaus kann auch hier überschüssiges Wasser wieder zu Problemen beim Gießen führen. Deshalb muss die Form vor dem Guss getrocknet werden.

Weiterhin kann es auch sein, dass die Kornverteilung reaktiver Zemente ein Problem bei den im 3D-Druck üblichen Schichterzeugungsvorrichtungen bildet. Die Zemente sind häufig schlecht fließfähig und neigen zu Agglomeraten. Das Ergebnis sind schlechte Oberflächen und Bauteilfehler. Zudem entstehen durch das feine Korn unangenehme Stäube. Das ungebundene Pulver im Baubehälter ist stark alkalisch und damit hautunfreundlich.

Neben den hydraulischen Bindemitteln sind auch sogenannte Kristallbildner für den Einsatz für Formwerkstoffe bekannt.

Hierunter fallen beispielsweise Salz-gebundene Formwerkstoffe, wobei Sande mit Salzen vermischt oder gecoatet werden können und das Partikelmaterial mit einem Lösungsmittel - in der Regel einer wässrige Lösung - bedruckt wird. Das Salz löst sich dabei und bildet Brücken zwischen den Partikeln. Trocknet man anschließend die Form, entweicht das Wasser und die Bindung wird fest.

Salzgebundene Formwerkstoffe haben den Vorteil, dass sie nach dem Guss "nass" entfernt werden können, indem die Gussteile in ein Wasserbad getaucht werden. Das Salz löst sich, der Sand verliert die Bindung und kann ausgespült werden.

Im Salz sind jedoch nach dem Trocknen Wasserbestandteile gebunden, die beim Abguss der Form freigesetzt werden können, was wieder zu den schon oben erwähnten Gasproblemen führen kann.

Zudem ist die Formhaltigkeit der Kerne relativ gering, da das Salz zur Feuchtigkeitsaufnahme auch aus der Luft tendiert und dabei erweicht.

Die Trocknung nach dem Druck ist genau zu steuern, da eine zu starke Trocknung wiederum zum Bindungsverlust führt. Eine zu geringe Trocknung führt wiederum zu Gasproblemen beim Abguss.

Die Salze im Sand sind oft aggressiv gegenüber Metallen, so dass Werkstoffe, die in Kontakt mit dem Sand kommen, entsprechend zu passivieren sind.

Der Einsatz Zement-, Gips- und Salz- gebundener Formstoffmischungen hat im Serienguss, insbesondere im Automobilguss, keine wesentliche Bedeutung.

Darüberhinaus ist auch allgemein bekannt Wasserglas als Bindemittel für die Herstellung von Gießereiformen zu verwenden Aus der EP 2 163 328 A1 ist beispielsweise ein Verfahren zum Herstellen eines Formteils einer Giessform zum Vergiessen von Metallschmelzen bekannt, das das Bereitstellen eines Kern- oder Formsandes umfassend einen Formgrundstoff, beschichtet mit Wasserglas und einem Wassergehalt im Bereich von >= etwa 0,25 Gew.-% bis etwa 0,9 Gew.-%, bezogen auf das Gesamtgewicht des Kern- und Formsands, das Einfüllen des Kern- oder Formsandes in einen das Formteil abbildenden Hohlraum und das In Kontakt bringen des Kern- oder Formsand mit wenigstens einem Härtungsmittel vor, während und/oder nach dem Einfüllen und Verfestigen des Formteils umfasst.

Allgemein ist der Einsatz von Wasserglas in der Gießereiindustrie bekannt. Wasserglasbinder werden zur Form- und Kernherstellung im Serienguss eingesetzt. Dabei kann die Aushärtung in einem kalten Werkzeug über die Reaktion mit Kohlendioxid-Gas (CO₂-Gas)oder die Reaktion mit einem Ester erfolgen. Zusätzlich hat sich in den letzten Jahren die Aushärtung von wasserglasgebundenen Formstoffmischungen durch heiße Werkzeuge, analog dem organischen Hot-Box Prozess und dem kombinierten Aushärten durch beheizte Werkzeuge und die Begasung mit, meist beheizter Luft, etabliert.

So hergestellte Sandkerne werden vornehmlich im Aluminium-Kokillenguss eigesetzt. Dies wird beispielsweise in der EP 2 163 328 A1

Die Kernherstellung mittels Wasserglas und Ester, bzw. CO₂ Gas als geruchsfrei und damit umweltverträglich eingestuft werden.

Nachteile bei diesen Verfahren mit Wasserglasbindern sind insbesondere, dass sie nach dem Abguss schlecht zerfallen und dass der Restsand nur schwer regenerierbar ist im Vergleich zu organisch gebundenen Sanden.

Aufgabe der Erfindung ist es deshalb in ein Verfahren für den schichtweisen Aufbau von Modellen zur Verfügung zu stellen, das die Nachteile von bekannten Verfahren nicht aufweist oder zumindest die Nachteile des Standes der Technik vermindert oder vollständig überwindet, beispielsweise umweltverträglich ist und für dreidimensionale Druckverfahren wirtschaftlich einsetzbar ist.

Die Aufgabe wird durch die in den Ansprüchen näher bezeichneten Ausführungsformen gelöst. Die Erfindung betrifft ein Verfahren zum schichtweisen Aufbau von Modellen, wobei in einem Baubereich ein partikelförmiges Material schichtweise aufgetragen und selektiv gehärtet wird und diese Schritte wiederholt werden, bis ein gewünschtes Modell erhalten wird.

Das Material umfasst hierbei ein partikelförmiges Baumaterial, welches eine sprühgetrockene Alkalisilikatlösung aufweist. Ein selektives Aktivieren der Härtung erfolgt dabei mittels einer Wasser umfassenden Lösung und einem Trocknungsprozess.

Unter einem Baubereich ist dabei ganze allgemein ein Bereich zu verstehen, in dem ein Modellaufbau erfolgt. Es könnte eine Bauplattform sein oder auch ein Baucontainer. Es könnte dies aber auch ansonsten jeder andere Bereich sein. Dies hängt insbesondere auch von dem eingesetzten Bauprozess oder der eingesetzten Vorrichtung ab. So wären auch Förderbänder oder auch einfach nur der Boden denkbar.

Das Auftragen des Materials und die selektive Härtung des Baumaterials kann derart erfolgen, dass zuerst das partikelförmige Material schichtweise mittels eines Beschichters aufgetragen und anschließend selektiv eine Härtung durchgeführt oder Teile der selektiven Härtung durchgeführt werden oder es könnten auch manche oder alle Verfahrensschritte gleichzeitig erfolgen.

Das Material umfasst gemäß der Erfindung ein partikelförmiges Baumaterial. Ein solches partikelförmiges Baumaterial könnte dabei jedes aus dem Stand der Technik für die Herstellung von Modellen und insbesondere von Kernen bekannte Material oder Mischungen daraus umfassen.

Als Baumaterial, auch Formgrundstoff genannt, eignen sich typische Feuerfestmaterialien wie beispielsweise Quarzsande, Kerphalite, Olivinsand und Chromerzsande. Daneben eignen sich auch künstlich geformte Formstoffe wie Cerabeads und (Min-Sand) Bauxitsand. Auch Mischungen verschiedener Formstoffe sind durchaus denkbar.

Die Baumaterialien sollten dabei nicht sauer sein. Zudem wird eine Kornverteilung angestrebt, die ihr Mittenkorn bei etwa der Hälfte der gewünschten Schichtstärke aufweist. Das heißt bei beispielsweise Schichtstärken von ca. 300 µm sollte der Median der Partikeldurchmesser ungefähr 150 µm messen.

Typische Schichtdicken reichen von 0,1 mm bis 0,5 mm.

Weiterhin weist gemäß der vorliegenden Erfindung das Material eine sprühgetrockene Alkalisilikatlösung auf. Ein selektives Aktivieren der Härtung erfolgt mittels einer Wasser umfassenden Lösung. Weiterhin wird auch ein Trocknungsprozess durchgeführt.

Alkalisilikatlösungen, häufig auch Wasserglas genannt, sind dem Fachmann bekannt und bezeichnen aus dem Schmelzfluss erstarrte, glasige, wasserlösliche Kaliumsilicate und Natriumsilicate (Salze von Kieselsäuren) mit einem Molverhältnis SiO₂/Alkalioxid von 1,5:1 bis 4:1 in wässriger Lösungen.

Alkalimetallsilicate beziehungsweise Wasserglas werden durch Zusammenschmelzen von Quarzsand mit Natriumcarbonat oder Kaliumcarbonat bei 1400 bis 1500 °C hergestellt, wobei Kohlendioxid frei wird. Die erstarrte Schmelze wird in gemahlenem Zustand in den Handel gebracht oder sofort in eine Lösung gewünschter Konzentration überführt. Natriumsilicat wird üblicherweise durch Zusammenschmelzen von Siliciumdioxid und Natriumcarbonat im entsprechenden Molverhältnis als glasartig erstarrendes Produkt hergestellt, das beim Tempern unterhalb des Schmelzpunktes kristallisiert.

Wasserglas sowie Natriumsilicat ist auch durch direkte Auflösung von Sand in Natriumhydroxidlösung bei erhöhtem Druck und Temperaturen bis ca. 150 °C herstellbar.

Die Alkalisilikatlösung kann darüberhinaus auch weitere Stoffe aufweisen. So könnte sie beispielsweise mit einem Tensid oder anderen Hilfsstoffen versehen sein.

Gemäß der vorliegenden Erfindung wird eine sprühgetrocknete und auch noch sprühtrockene Alkalisilikatlösung eingesetzt. Eine solche weist vorzugsweise einen Glühverlust von 10 - 25 Gew.-% auf. Die Sprühtrocknung oder auch Zerstäubungstrocknung ist ein Verfahren zur Herstellung von Pulvern aus Flüssigkeiten, bei dem zerstäubte Flüssigkeiten mit einem heißen Gas getrocknet werden.

Das selektive Härten gemäß der vorliegenden Erfindung erfolgt mittels einer Wasser umfassenden Lösung. Dies ist vorliegend beispielsweise derart vorgesehen, dass ein sprühtrockenes Wasserglas beziehungsweise eine sprühtrockene Alkalisilikatlösung aufweisendes Partikelmaterial schichtweise mit einem Beschichter, wie er beispielsweise bei aus dem Stand der Technik bekannten Rapid Prototyping Verfahren bekannt ist, aufgetragen und dann beispielsweise mittels eines Druckkopfes eine wasserhaltige Lösung aufgebracht wird. Das Wasser aktiviert dabei eine Härtung der Alkalisilikatlösung, wodurch nach Entzug des Wassers, beispielswiese durch Trocknung, eine Verbindung des Partikalmaterials stattfindet.

Die Zugabe von Wasser führt dabei zu einem Auflösen des Pulverbinders. Gemäß der vorliegenden Erfindung verwendet man einen sprühgetrockneten Binder. Dieser weist den Vorteil auf, dass er sich schneller auflöst als ein normal getrockneter Binder. Der selektiv in der Formsandmischung durch das auf Wasser basierende Lösungsmittel erzeugte flüssige Binder führt zu einer Adhäsion zwischen den Partikeln des Baumaterials. Das auf Wasser basierende, beziehungsweise Wasser aufweisende Lösungsmittel dient dazu, das als Binder eingesetzte Alkalisilikat anzulösen und zur Bildung von Binderbrücken zwischen den einzelnen Partikelkörnern beizutragen (Adhäsion).

Um den festen Binder zu aktivieren muss er gelöst werden, dazu wird ein Wasser aufweisendes Lösungsmittel benötigt. Am besten eignet sich dabei reines Wasser. Wasser lässt sich jedoch mit vorzugsweise eingesetzten Einzeltropfenerzeugern zum selektiven Einbringen des Lösungsmittels nur schwer dosieren. Dies liegt an einer relativ geringen Viskosität von rund 1 mPas, die zu einer mangelnde Dämpfung der Flüssigkeitssäule in der Düse führt. Zudem ist die Oberflächenspannung von Wasser relativ hoch, so dass viel Energie notwendig ist, um Einzeltropfen zu erzeugen. Nicht zuletzt tendiert Wasser zur Aufnahme von Gasen z.B. der Luft. Bei den in den Tropfenerzeugern vorkommenden Unterdrücken entweicht das gelöste Gas und nimmt dann die Druckstöße auf, die der Tropfenerzeugung dienen sollten. Entsprechend ist es notwendig, das Wasser für den Gebrauch in den Tropfenerzeugern zu modifizieren.

Hierzu könnte beispielsweise eine Zumischung von Rheologischen Additiven, Andickern wie Glycerin, Glycol oder Schichtsilikaten dienen. Insbesondere letztere stellen sich als vorteilhaft heraus, da es sich um ein rein anorganisches Werkstoffsystem handelt, das sich beim Abguss neutral verhält, das heißt, nicht zur Pyrolyse führt.

Als vorteilhafte Menge des Schichtsilikates im Wasser haben sich 2 bis 20 Gew.-% herausgestellt und noch besser eine Menge von 8 bis 12 Gew.-%.

Der Wasser aufweisenden Lösung zum selektiven aktivieren der Härtung können dann weitere Zusätze wie beispielsweise ein Farbstoff zur Formerkennung, ein Biozid und Mittel zur Oberflächenspannungsmodifikation beigemischt werden.

Zum Aushärten des selektiv bedruckten Materials ist noch ein Trocknungsprozess notwendig. Welcher Trocknungsprozess der geeignete ist, hängt von vielen Faktoren,, wie dem verwendeten Material, der Bauteilgröße, den Umgebungsbedingen usw. ab.

Es könnte das fertiggestellte Bauteil beispielsweise nach dem Aufbau nur bei Raumtemperatur getrocknet werden. Wenn dies zu langsam ist, so kann auch ein physikalischer Trocknungsprozess durch Entzug von Wasser bei Raumtemperatur oder/und kann auch die Erhöhung der Temperatur den Aushärtprozess beschleunigen.

Dies kann alles während und/oder nach dem Bauprozess erfolgen.

Der Vorteil des beschriebenen erfindungsgemäßen Verfahrens ist, dass das nicht bedruckte Material wiederverwendet werden kann.

Die Vorrichtung zum selektiven Aufbringen des Härters muss nicht permanent gereinigt werden, da kein Verkleben stattfindet, denn es werden keine selbst- oder lufthärtenden Stoffe verwendet.

Die trockene Materialmischung ist mit bekannten Verfahren einfach in dünnen Schichten auszubringen und es kann ein hohes Festigkeitsniveau erzielt werden.

Das Partikelmaterial kann gemäß einer bevorzugten Ausführungsform der vorliegenden Erfindung Sand umfassen. Wenn nun gemäß einer bevorzugten Variante Sand im Partikelmaterial als Baumaterial verwendet wird, so können vorteilhafterweise Gusskerne aus Sand hergestellt werden.

Daneben könnte es aber auch vorteilhaft sein, wenn das Material einen anorganischen Härter, insbesondere einen latenten anorganischen Härter umfasst. Der Begriff latenter anorganischer Härter umschreibt dabei eine Substanz die bei Normalbedingungen, das heißt Raumtemperatur und Normaldruck sehr langsam mit dem Binder reagiert aber bei einer Temperaturerhöhung zu einer schnellen Härtung führt. Ein solcher latenter Härter könnte gemäß einer besonders bevorzugten Ausführungsform der vorliegenden Erfindung beispielsweise amorphes Siliciumdioxid sein.

Wird der Trocknungsprozess bei einem Verfahren der vorliegenden Erfindung beispielsweise thermisch induziert, so kommt es zu einer Alkali-Silica-Reaktion zwischen dem Alkalisilikatbinder und dem amorphen Siliciumdioxid als latentem Härter.

Wird ein latenter Härter, wie amorphes Siliciumdioxid, zugesetzt, kann die Abbindereaktion verstärkt und zusätzlich irreversibel gestaltet werden. Hier erfolgt die Härtung schneller und führt zu einem höheren Festigkeitsniveau wenn der Mischung Wärme zugeführt wird.

Gemäß einer bevorzugten Ausführungsform der vorliegenden Erfindung weist das Material einen Zusatzbinder auf. Dies könnte beispielsweise ein hydraulisch abbindendes Bindemittel, also ein Bindemittel, das zum Binden Wasser benötigt, sein.

Solche hydraulisch abbindenden Binder sind beispielsweise Portlandzement, Tonerdzement und/oder ein hydraulischen Aluminiumoxidbinder.

Wenn Wasser in das Material selektiv eingebracht wird, kann es sein, dass das Wasser das Material weiter penetriert, als erwünscht und so zu Ungenauigkeiten des aufzubauenden Modells führt. Zur Begrenzung der Penetration kann dem Material ein hydraulisches Bindemittel, vorzugsweise ein Zementwerkstoff zugemischt werden. Solche vorzugsweise eingesetzten Zementpulver sind sehr fein und weisen Partikelgrößen von vorzugsweise unter 30µm auf. Dies führt zu einer großen Oberfläche und deshalb auch zu einer raschen und hohen Wasseraufnahme. Überschüssiges Wasser wird so von diesen Partikeln aufgenommen und führt nicht mehr zum Formverlust. Das überschüssige Wasser, das nicht zum Lösen des Binders gebraucht wird, wird im hydraulischen Bindemittel, dem Zement eingebaut. Der Zement trägt damit zur Festigkeitssteigerung bei und ermöglicht es gezielt auf die Verfestigungskurve einzuwirken.

Gemäß der vorliegenden Erfindung sollten die Wasserglaspartikel dabei, um eine hohe Löslichkeit zu gewährleisten, möglichst klein sein. Übliche Partikeldurchmesser hierfür sind kleiner als 150 µm und noch vorteilhafter unter 100 µm.

Typische Vertreter von pulverförmigem sprühgetrockentem Wasserglaspulver sind beispielsweise Sikalon A der Firma Woellener oder Portil A der Firma Cognis. Sie werden durch Sprühtrocknung wässriger Alkalisilikatlösungen (Natrium- oder Kaliumsilikatlösungen) hergestellt. Zur Beschreibung des Prozesses kann dabei auch auf Ullmanns Enzyklopädie der technischen Chemie 1982, 4. Auflage, Band 21, Seite 412 verwiesen werden.

Als weitere Variante wäre es auch möglich, dass das partikelförmige Baumaterial, beziehungsweise der Formgrundstoff mit der sprühtrockenen Alkalisilikatlösung umhüllt wird oder die Alkalisilikatlösung darauf aufgebracht wird. Ein solches Verfahren stellt das sogenannte Coaten dar, bei dem der gecoatete Formgrundstoff beispielsweise mittels Sprühtrocknung einer wäßrigen Mischung des Formgrundstoffs und des Alkalisilikatbinders bereitgestellt werden kann. Der gecoatete Formgrundstoff wird dann schichtweise ausgebracht und einer wässrigen Lösung bedruckt.

Vorzugsweise soll bei einem erfindungsgemäßen Verfahren beziehungsweise Materialsystem das Wasserglas ein Molverhältnis M₂O:SiO₂ von 1,6 bis 3,8, insbesondere 1,9 bis 3,4 aufweisen (M= Alkali, Natrium und/oder Kalium).

Üblicherweise hat ein sprühgetrockneter Alkalisilikat-Binder beziehungsweise eine Alkalisilikatlösung einen Glühverlust von 10 - 40 Gew.-%, vorzugsweise 15-25 Gew.-%.

Gemäß einer besonders bevorzugten Ausführungsform der vorliegenden Erfindung stammt der latente Härter aus der Gruppe der Materialien der Kieselsäuren die eine Alkali-Kieselsäurereaktion eingehen können, dies sind meist synthetische Kieselsäuren. Besonders bevorzugt kommen dabei thermische oder pyrogene Kieselsäuren zum Einsatz, die beispielsweise als Nebenprodukt bei der Herstellung von Rohsilicium oder Ferrosilicium entstehen, Microsilica, Silica Fume oder Condensed Silica Fume entstehen.

Vorteilhafterweise ist der latente Härter aus der Gruppe der synthetischen Kieselsäuren, insbesondere thermischen und/oder pyrogenen Kieselsäuren ausgewählt. Der Begriff synthetische Kieselsäure bezieht sich hierbei auf künstlich hergestellte Kieselsäuren, wie thermisch hergestellte Kieselsäuren durch Flammenpyrrolyse, im Elektroschmelzofen oder im Plasma sowie Fällungskieselsäuren.

Unter "Synthese" ist die natürliche oder künstliche, gegebenenfalls mehrstufige und vor allem gezielte Herstellung chemischer Verbindungen aus den Elementen, durch Aufbau aus einfacheren Verbindungen oder durch Abbau komplexerer Strukturen, zu verstehen.

Eine Reaktion gemäß der vorliegenden Erfindung könnte beispielsweise derart ablaufen. Sprühgetrockneter Binder wird durch Zugabe von Wasser aktiviert, reagiert dann mit einem vorzugsweise zugegebenen latenten Härter, beispielsweise amorphem Siliciumdioxid. Die hierbei stattfindende Härtereaktion, eine Alkali-Kieselsäure-Reaktion, wird durch Energiezufuhr, insbesondere Wärme beschleunigt und führt dann zu einer schnelleren Aushärtung des entstandenen Modelles und einer höheren Festigkeit des Modelles als ohne Zugabe von latentem Härter.

Auch die Lagerstabiltät der Kerne bei erhöhter Luftfeuchtigkeit als auch die thermische Beständigkeit, etwa die Durchbiegung von Kernen, beim Gießprozess nimmt im Vergleich zu aus nur mittels Alkalisilikatbinder als Binder hergestellten Kernen deutlich zu.

Gemäß einer besonders bevorzugten Ausführungsform der vorliegenden Erfindung beträgt der Alkalisilikatanteil, also der dem Material insbesondere Partikelmaterial, wie beispielsweise Sand zugesetzte Binderanteil, der in fester Form vor dem Anlösen mit der Drucklösung vorliegt 2-18, bevorzugt 3-10 Gew.-%.

Vorteilhafterweise beträgt der Anteil des latenten Härters in Relation zu dem in fester Form vorliegenden Binder 5-90 Gew.-%.

Weist das Material nach einer bevorzugten Ausführungsform ferner Feuerfeststoffe und/oder Füllstoffe auf, so können die Eigenschaften des geschaffenen Modelles, wie des Gusskernes optimiert werden.

Solche Feuerfeststoffe und/oder Füllstoffe werden beispielsweise auch Formstoffüberzügen eingesetzt, z.B. Graphit, Aluminiumoxid, Zirkonsilikat, um die Abgussgüte zu steigern. Weitere Zusätze zu dem Sand können wasserlösliche Binder Phosphate oder Kohlenhydrate, wie z.B. Dextrin sein.

Gemäß einer bevorzugten Ausführungsform der vorliegenden Erfindung umfasst das Material eine Mischung aus sprühgetrocknetem Alkalisilikatbinder, Sand, amorphem Siliziumdioxid in einem Gew.-%-Verhältnis von 1,5-15 : 80-98 : 0,2-8.

Vorteilhafterweise weist die Lösung zum Aktivieren der selektiven Härtung ein Schichtsilikat, vorzugsweise 5-15 Massenprozent, enthält.

Vorzugsweise wird die Lösung zur Aktivierung der selektiven Härtung mit einem Tintenstrahldruckkopf, vorzugsweise mit Piezotechnologie, aufgebracht wird.

Damit die Härtung in dem Prozess beschleunigt wird, könnte es auch vorteilhafterweise vorgesehen sein, dass Wärme zugeführt wird.

Dies kann beispielsweise durch Konvektion und/oder Wärmestrahlung erfolgen.

Die derart hergestellten Festkörper weisen vorzugsweise eine Dreipunktbiegefestigkeit von etwa größer gleich 200 N/cm² auf.

Die Erfindung wird nachfolgend anhand bevorzugter Ausführungsformen in den folgenden Beispielen veranschaulicht.

### Beispiel:

Ein Materialsystem für eine Verwendung für ein drei-dimensionales Druckverfahren wird beispielsweise folgendermaßen bereitgestellt.

Es werden 90 Gew.-% Quarzsand der Type GS 14 RP mit einem mittleren Korndurchmesser von 0,13 mm der Firma Grube Strobel mit 6 Gew.-% Wasserglaspulver (beispielsweise Molarer-Modul 2,10 , Portil A der Firma Cognis), 2 Gew.-% synthetischem Siliciumdioxid aus dem Lichtbogenofen (Microsilica 971 U der Firma Elkem) als latentem Härter sowie 2 Gew.-% Tonerdzements (CA 14 S der Firma Almatis) als hydraulischem Binder intensiv gemischt, so dass die Mischung vollständig homogen ist.

Diese trockene Formstoffmischung wird schichtweise aufgetragen auf einen Baubereich aufgetragen. Hieran anschließend wird mit einem üblicherweise für dreidimensionale Druckverfahren verendeten Druckkopf mittels einer bekannten Tintenstrahldrucktechnologie selektiv Wasser aufgedruckt, damit der Wasserglasbinder aktiviert wird. An den bedruckten Stellen löst sich der Binder und verklebt die umliegenden Partikel.

Das selektive Drucken geschieht dabei vorzugsweise gemäß Computerdaten, um ein erwünschtes Modell herzustellen.

Das oder Teile des Partikelmaterials kann dabei vor dem selektiven Bedrucken erwärmt werden. So kann der Trocknungsprozess zum Aushärten schneller erfolgen.

Nun wird wieder eine Schicht Formstoffmischung aufgebracht und dann wiederum gemäß Computerdaten selektiv bedruckt.

Dies wird solange wiederholt, bis das erwünschte Modell aufgebaut ist. Es entsteht der gewünschte Körper, der nach Beendigung des Schichtbauprozesses vom umliegenden Sand befreit werden muss.

Zur Erhöhung der Festigkeit und gleichzeitig zur Schlichtung der Oberfläche können die fertigen Bauteile mit einer Wasserglaslösung oder einem Wasserglas-Wasser-Gemisch besprüht und anschließend im Ofen getrocknet werden.

Der gemischte unbedruckte Sand kann in den Prozess wieder eingeschleust werden. Dazu muss dieser von den Modellen, beziehungsweise Formteilen entfernt und gesiebt werden, um gröbere Verunreinigungen zu vermeiden. Vorteilhafterweise wird der wiederverwendete Formstoff mit frischem Material vor einer erneuten Verwendung gemischt, um so eine gleichbleibende Qualität zu erzielen. Die Zumischung von neuem Sand zu sollte vorzugsweise zwischen 10 und 50 Gew.-% liegen.

Es hat sich gezeigt, dass eine gute Bindewirkung erzielt werden kann wenn 2 und 12 Gew.-%% Bindergemisch (Mischung aus sprühgetrocknetem Wasserglas und amorphen Siliciumdioxid) in den Sand gemischt werden.

Vorteilhafterweise beträgt die Zumischung zwischen 3% und 6%. Die erzielbaren Festigkeiten liegen dann bei Verwendung von Quarzsand der Type GS14 (MK: 0,13 mm / AFS -Zahl 97) bei etwa 280 N/cm². Um eine ausreichende Aktivierung des Binders zu erzielen sind dann zwischen 3% und 18% bezogen auf das Gewicht wässrige Lösung auf den Formstoff zu dosieren. Vorteilhafterweise beträgt die zu dosierende Menge zwischen 5% und 10%.

Um zu vermeiden, dass Wasser ungewollt in nicht bedruckte Randzonen penetriert und dort ebenfalls zu einer Verfestigungsreaktion führt und damit zu einer Verschlechterung der Abbildungstreue und der Auflösung führt kann eine beschleunigte Verfestigungsreaktion vorgesehen werden.

Dies wird beispielsweise durch Eintrag von Wärme erzielt. Eine Erhöhung der Sandtemperatur von 20°C auf 60°C beschleunigt den Verfestigungsprozess von mehreren auf wenige Stunden. Bei noch weiterer Steigerung auf 90°C kann die Verfestigung sogar in wenigen Minuten erfolgen. Durch den Wärmeeintrag wird die Härtereaktion des Binders mit dem latenten Härter, dem amorphen Siliciumdioxid, deutlich beschleunigt. Allerdings muss dabei beachtet werden, dass prozessierte Schichten nicht getrennt voneinander abbinden dürfen, da sonst der Schichtenverbund nicht gegeben ist. Das heißt, je nach Baufeldgröße und Prozessgeschwindigkeit sollte die Verfestigungsdauer vorzugsweise nicht kürzer als 10 min sein.

## Patentansprüche

1. Verfahren zum schichtweisen Aufbau von Modellen, wobei in einem Baubereich ein partikelförmiges Material schichtweise aufgetragen mittels eines Beschichters und anschliessend selektiv gehärtet wird und diese Schritte wiederholt werden, bis ein gewünschtes Modell erhalten wird,
das partikelförmige Material ein partikelförmiges Baumaterial umfasst,
**dadurch gekennzeichnet, dass**
das partikelförmige Material eine sprühgetrocknete Alkalisilikatlösung aufweist, ein selektives Aktivieren der Härtung mittels einer Wasser umfassenden Lösung und ein Trocknungsprozess erfolgt.

2. Verfahren nach Anspruch 1,
**dadurch gekennzeichnet, dass**
das partikelförmige Material Sand umfasst.

3. Verfahren nach einem der vorhergehenden Ansprüche,
**dadurch gekennzeichnet, dass**
das partikelförmige Material einen anorganischen Härter, insbesondere einen latenten anorganischen Härter umfasst.

4. Verfahren nach einem der vorhergehenden Ansprüche,
**dadurch gekennzeichnet, dass**
das partikelförmige Material einen Zusatzbinder, insbesondere ein hydraulisch abbindendes Bindemittel aufweist, vorzugsweise
dass
das hydraulisch abbindende Bindemittel Portlandzement, Tonerdzement und/oder einen hydraulischen Aluminiumoxidbinder umfasst.

5. Verfahren nach einem der vorhergehenden Ansprüche,
**dadurch gekennzeichnet, dass**
die sprühgetrocknete Alkalisilikatlösung partikelförmig im partikelförmigen Material enthalten ist, vorzugsweise
dass
die sprühgetrocknete Alkalisilikatlösung als Coating auf das partikelförmige Baumaterial aufgebracht ist.

6. Verfahren nach einem der vorhergehenden Ansprüche,
**dadurch gekennzeichnet, dass** das partikelförmige Material einen latenten Härter umfasst, der ausgewählt ist aus der Gruppe der synthetischen Kieselsäure, insbesondere thermischen und/oder pyrogenen Kieselsäuren.

7. Verfahren nach einem der vorhergehenden Ansprüche,
**dadurch gekennzeichnet, dass**
der sprühgetrocknete Alkalisilikatanteil 2-18, bevorzugt 3-10 Gew.-% des partikelförmigen Materials beträgt.

8. Verfahren nach einem der vorhergehenden Ansprüche,
**dadurch gekennzeichnet, dass**
der Anteil des latenten Härters 5-90 Gew.-% bezogen auf das Alkalisilikat beträgt.

9. Verfahren nach einem der vorhergehenden Ansprüche,
**dadurch gekennzeichnet, dass**
das partikelförmige Material ferner Feuerfeststoffe und/oder Füllstoffe umfasst.

10. Verfahren nach einem der vorhergehenden Ansprüche,
**dadurch gekennzeichnet, dass**
das partikelförmige Material eine Mischung aus sprühgetrocknetem Alkalisilikatbinder, Sand, amorphes Siliziumdioxid in einem Gew.-%-Verhältnis von 1,5-15 : 80-98 : 0,2-8 umfasst.

11. Verfahren nach einem der vorhergehenden Ansprüche,
**dadurch gekennzeichnet, dass**
die Lösung zum Aktivieren der selektiven Härtung ein Schichtsilikat, vorzugsweise 5-15 Massenprozent, enthält.

12. Verfahren nach einem der vorhergehenden Ansprüche,
**dadurch gekennzeichnet, dass** die Lösung zum selektiven Härten mit einem Tintenstrahldruckkopf, vorzugsweise mit Piezotechnologie, aufgebracht wird oder/und dass die Härtung durch Wärme, insbesondere Konvektion und/oder Wärmestrahlung beschleunigt wird.

## Claims

1. A method for the layered construction of models, wherein a particulate material is applied in layers in a construction area by means of a coater and is then selectively cured, and these steps are repeated until a desired model is obtained, said particulate material comprising a particulate construction material,
**characterized in that**
the particulate material comprises a spray dried alkali silicate solution, selective activation of the curing is effected by means of a solution comprising water, and a drying process is performed.

2. The method according to claim 1,
**characterized in that**
the particulate material comprises sand.

3. The method according to any one of the preceding claims,
**characterized in that**
the particulate material comprises an inorganic curing agent, in particular a latent inorganic curing agent.

4. The method according to any one of the preceding claims,
**characterized in that**
the particulate material comprises an additional binder, in particular a hydraulic-setting binder, preferably
**in that** the hydraulic-setting binder comprises Portland cement, calcium-aluminate cement and/or a hydraulic-setting aluminum oxide binder.

5. The method according to any one of the preceding claims,
**characterized in that**
the spray dried alkali silicate solution is contained in particulate form in the particulate material, preferably
**in that** the spray dried alkali silicate solution is applied as a coating onto the particulate construction material.

6. The method according to any one of the preceding claims,
**characterized in that** the particulate material comprises a latent curing agent selected from the group consisting of synthetic silica, in particular thermal and/or pyrogenic silicas.

7. The method according to any one of the preceding claims,
**characterized in that**
the spray dried alkali silicate is present in an amount of 2-18, preferably 3-10 % by weight of the particulate material.

8. The method according to any one of the preceding claims,
**characterized in that**
the latent curing agent is present in an amount of 5-90 % by weight of the alkali silicate.

9. The method according to any one of the preceding claims,
**characterized in that**
the particulate material further comprises refractory materials and/or filler materials.

10. The method according to any one of the preceding claims,
**characterized in that**
the particulate material comprises a mixture of spray dried alkali silicate binder, sand, amorphous silicon dioxide, at a % by weight ratio of 1.5-15 : 80-98 : 0.2-8.

11. The method according to any one of the preceding claims,
**characterized in that**
the solution for activating selective curing includes a sheet silicate, preferably at 5-15 mass-%.

12. The method according to any one of the preceding claims,
**characterized in that** the solution for selective curing is applied by an inkjet print head, preferably using piezo technology, or/and that curing is accelerated by heat, in particular convection and/or thermal radiation.

## Revendications

1. Procédé de construction de modèles par couches, dans lequel un matériau en particules est appliqué en couches dans une zone de construction au moyen d'un enducteur et ensuite durci sélectivement, et ces étapes sont répétées jusqu'à obtenir un modèle désiré,
le matériau en particules comportant un matériau de construction en particules,
**caractérisé en ce que**
ledit matériau en particules comporte une solution de silicate alcalin séchée par atomisation, une activation du durcissement est effectuée au moyen d'une solution comportant de l'eau et on effectue un procédé de séchage.

2. Procédé selon la revendication 1,
**caractérisé en ce que**
le matériau en particules comporte du sable.

3. Procédé selon l'une quelconque des revendications précédentes,
**caractérisé en ce que**
le matériau en particules comporte un durcisseur inorganique, notamment un durcisseur inorganique latent.

4. Procédé selon l'une quelconque des revendications précédentes,
**caractérisé en ce que**
le matériau en particules comporte un liant additionnel, notamment un liant hydraulique, de préférence
**en ce que** le liant hydraulique comporte du ciment Portland, du ciment alumineux et/ou un liant hydraulique à base d'oxyde d'aluminium.

5. Procédé selon l'une quelconque des revendications précédentes,
**caractérisé en ce que**
la solution de silicate alcalin séchée par atomisation est contenue sous forme de particules dans le matériau en particules, de préférence
**en ce que** la solution de silicate alcalin séchée par atomisation est appliquée sur le matériau de construction en particules sous forme d'un revêtement.

6. Procédé selon l'une quelconque des revendications précédentes,
**caractérisé en ce que** le matériau en particules comporte un durcisseur latent choisi dans le groupe constitué par la silice synthétique, notamment les silices thermiques et/ou pyrogénées.

7. Procédé selon l'une quelconque des revendications précédentes,
**caractérisé en ce que**
la proportion du silicate alcalin séchée par atomisation est de 2-18, de préférence de 3-10 % en poids du matériau en particules.

8. Procédé selon l'une quelconque des revendications précédentes,
**caractérisé en ce que**
**que** la proportion du durcisseur latent est de 5-90 % en poids du silicate alcalin.

9. Procédé selon l'une quelconque des revendications précédentes,
**caractérisé en ce que**
le matériau en particules comporte en outre des réfractaires et/ou des charges.

10. Procédé selon l'une quelconque des revendications précédentes,
**caractérisé en ce que**
le matériau en particules comporte un mélange de liant à base de silicate alcalin séchée par atomisation, de sable et de dioxyde de silicium amorphe, dans un rapport, en % en poids, de 1,5-15 : 80-98 : 0,2-8.

11. Procédé selon l'une quelconque des revendications précédentes,
**caractérisé en ce que**
la solution destinée à activer le durcissement sélectif présente un silicate stratifié, dont la teneur est de préférence de 5-15 % en masse.

12. Procédé selon l'une quelconque des revendications précédentes,
**caractérisé en ce que** la solution pour le durcissement sélectif est appliquée par une tête à jet d'encre, de préférence à technologie piézoélectrique, ou/et
**en ce que** ledit durcissement est accéléré par la chaleur, notamment la convection et/ou le rayonnement thermique.
